# EUROPÄISCHE PATENTSCHRIFT

(11) **EP 1 163 415 B1**
(45) Veröffentlichungstag und Bekanntmachung des Hinweises auf die Patenterteilung: **04.09.2002**
(21) Anmeldenummer: 00910870.5
(22) Anmeldetag: 21.03.2000
(51) Int. Cl.: E05F 15/00, B60J 10/00

(54) **DICHTUNGSPROFIL ZUM ABDICHTEN EINER KRAFTBETÄTIGTEN SCHLIESSEINRICHTUNG**
SHAPED SEAL FOR SEALING A POWER-OPERATED CLOSING DEVICE
PROFIL D'ETANCHEITE POUR ETANCHEIFIER UN DISPOSITIF DE FERMETURE ACTIONNE PAR ENERGIE EXTERIEURE

(30) Priorität: 23.03.1999 DE 19913105
(43) Veröffentlichungstag der Anmeldung: 19.12.2001
(73) Patentinhaber: Metzeler Automotive Profile Systems GmbH, D-88131 Lindau/Bodensee (DE)
(72) Erfinder: HOFMANN, Knut, D-88239 Wangen (DE); WESTERHOFF, Bernd, D-88085 Langenargen (DE)
(74) Vertreter: Preissner, Nicolaus, Dipl.-Ing.
(86) Internationale Anmeldenummer: EP0002501
(87) Internationale Veröffentlichungsnummer: WO00057013

(56) Entgegenhaltungen:
- FR-A- 1 549 640
- US-A- 3 056 628

## Beschreibung

Die vorliegende Erfindung betrifft ein Dichtungsprofil zum Abdichten einer kraftbetätigten Schließeinrichtung mit einem Einklemmschutz, der mindestens zwei zueinander beabstandete, elektrisch leitfähige Bereiche aufweist, deren Kontakt einen Schaltvorgang zum Ansteuern des Antriebsaggregats der Schließeinrichtung auslöst, wobei mindestens einer dieser Bereiche zur Verringerung des Durchgangswiderstands mit einem metallischen Leiter elektrisch leitend verbunden ist.

Ein derartiges Dichtungsprofil ist aus der auf dieselbe Anmelderin zurückgehenden DE 197 20 713 C1 bekannt. Das bekannte Dichtungsprofil weist zwei zueinander beabstandete, elektrisch leitfähige Bereich auf. In jeden dieser Bereiche ist zur Verringerung des Durchgangswiderstands ein metallischer Leiter eingebettet. Nachteilig bei der Verwendung dieser beiden metallischen Leiter ist, daß vergleichsweise viel Platz benötigt wird und Preis und Gewicht des Dichtungsprofils steigen. Weiter ist die Herstellung kompliziert, da beide metallischen Leiter bei der Extrusion eingebracht werden müssen.

Weiterhin offenbart die FR 1,549,640 A einen Einklemmschutz für eine bewegbar angeordnete Fensterscheibe, bei dem ein Dichtungsprofil in einen Rahmen eingesetzt ist. Das Dichtungsprofil weist einen elektrisch leitenden Einsatz auf, der den als elektrischer Leiter ausgebildeten Rahmen im Einklemmfall kontaktiert, um einen Schaltvorgang auszulösen. Im Einklemmfall wird der Einsatz zusammen mit dem Dichtungsprofil relativ zu dem Rahmen verschoben, wobei elastisch verformbare Zungen an dem Dichtungsprofil gewährleisten sollen, daß das Dichtungsprofil in seine Ursprungslage zurückkehrt. In der Praxis hat sich eine solche Ausgestaltung als unbefriedigend erwiesen.

Aufgabe der vorliegenden Erfindung ist es daher, ein derartiges Dichtungsprofil dahingehend weiterzubilden, daß eine kostengünstige Herstellung bei verringertem Preis, Gewicht und Platzbedarf erreicht wird.

Erfindungsgemäß wird diese Aufgabe bei einem Dichtungsprofil der eingangs genannten Art dadurch gelöst, daß der metallische Leiter als Carrier zur Befestigung des Dichtungsprofils und/oder als Flansch oder Rahmen, an dem das Dichtungsprofil befestigbar ist, ausgebildet ist.

Bei dem erfindungsgemäßen Dichtungsprofil kann auf einen der bisher erforderlichen metallischen Leiter vollständig verzichtet werden. Statt dessen wird auf den in vielen Fällen vorhandenen Carrier des Dichtungsprofils zurückgegriffen. Dieser Carrier ist im Regelfall aus Leichtmetall hergestellt und daher elektrisch leitend. Alternativ oder zusätzlich kann ein Flansch oder Rahmen verwendet werden, an dem das Dichtungsprofil befestigbar ist. Dieser Flansch oder Rahmen ist insbesondere bei der Anwendung im Fahrzeugbau vorhanden und aus elektrisch leitendem Metall. Durch den vollständigen Verzicht auf einen der bisher erforderlichen metallischen Leiter wird die Herstellung des erfindungsgemäßen Dichtungsprofils wesentlich vereinfacht. Weiter sinken Preis und Gewicht deutlich ab. Auch der Platzbedarf wird verringert.

Vorteilhafte Ausgestaltungen und Weiterbildungen gehen aus den Unteransprüchen hervor.

In erster vorteilhafter Ausgestaltung berührt der Carrier den elektrisch leitenden Bereich. Der elektrisch leitfähige Bereich ist hier nur auf einer Seite des Carriers angeordnet, so daß die Herstellung vereinfacht wird.

In zweiter vorteilhafter Ausgestaltung ist der Carrier teilweise oder vollständig von dem elektrisch leitenden Bereich umgeben. Auf diese Weise wird die Kontaktfläche zwischen dem elektrisch leitenden Bereich und dem Carrier vergrößert, so daß der Durchgangswiderstand weiter abgesenkt wird.

Gemäß einer vorteilhaften Weiterbildung ist der Carrier mit Ausnehmungen versehen. Diese Ausnehmungen verringern das Gewicht des Carriers und ermöglichen ein Verbiegen des Dichtungsprofils. Weiter ermöglichen die Ausnehmungen bei einem teilweise oder vollständig von dem elektrisch leitenden Bereich umgebenen Carrier eine direkte elektrisch leitende Verbindung von einer Seite des Carriers zur anderen. Dies ist von Vorteil, wenn ein Carrier aus einem elektrisch nicht leitenden Material oder ein gegenüber dem elektrisch leitenden Bereich isolierter Carrier verwendet wird. Die Ausnehmungen ermöglichen auch in diesen Fällen eine elektrisch leitende Verbindung von einer Seite des Carriers zur anderen.

Vorteilhaft erstreckt sich der elektrisch leitende Bereich bis zur Außenseite des Dichtungsprofils. Hierdurch wird ein elektrischer Kontakt mit dem Flansch oder Rahmen ermöglicht, an dem das Dichtungsprofil befestigbar ist, ohne daß zusätzliche elektrische Leiter vorgesehen werden müssen. Das Dichtungsprofil muß lediglich wie üblich an dem Flansch oder Rahmen befestigt werden.

Nach einer vorteilhaften Ausgestaltung weist der elektrisch leitende Bereich Lippen oder Ansätze zum Befestigen des Dichtungsprofils auf dem Flansch oder an dem Rahmen auf. Diese Lippen oder Ansätze werden an den Flansch oder den Rahmen angepreßt. Dieses Anpressen bewirkt einen guten elektrischen Kontakt, so daß der Durchgangswiderstand des Dichtungsprofils zuverlässig abgesenkt wird.

In vorteilhafter Weiterbildung weist der Einklemmschutzbereich eine Hohlkammer auf, in der mindestens einer der elektrisch leitenden Bereiche angeordnet ist. Vorteilhaft wird einer der elektrisch leitenden Bereiche an der Innenseite der Hohlkammer angeordnet, während der andere in die Hohlkammer hineinragt. Hierdurch wird ein zuverlässiger Kontakt zwischen den elektrisch leitfähigen Bereichen unabhängig von der Einklemmvorrichtung erreicht.

Gemäß einer vorteilhaften Ausgestaltung dient die Hohlkammer zum Abdichten der kraftbetätigten Schließeinrichtung. Der Einklemmschutzbereich des erfindungsgemäßen Dichtungsprofils erfüllt dann eine Doppelfunktion. Auf zusätzliche Elemente zum Abdichten der Schließeinrichtung kann verzichtet werden, so daß der Platzbedarf und das Gewicht sowie der Preis des erfindungsgemäßen Dichtungsprofils weiter sinken.

Vorteilhaft weist der von dem Carrier, dem Flansch oder dem Rahmen getrennte elektrisch leitende Bereich einen metallischen Leiter auf. Hierdurch wird auch in diesem Bereich der Durchgangswiderstand erheblich gesenkt.

Nachstehend wird die Erfindung anhand von Ausführungsbeispielen näher beschrieben, die schematisch in der Zeichnung dargestellt sind. Dabei zeigt:
- Figur 1: einen Querschnitt durch eine erste Ausführungsform des erfindungsgemäßen Dichtungsprofils;
- Figur 2: einen Querschnitt durch eine zweite Ausführungsform des erfindungsgemäßen Dichtungsprofils;
- Figur 3: einen Querschnitt durch eine dritte Ausführungsform des erfindungsgemäßen Dichtungsprofils;
- Figur 4: einen Querschnitt durch eine vierte Ausführungsform des erfindungsgemäßen Dichtungsprofils; und
- Figur 5: eine schematische Prinzipdarstellung des Wirkprinzips.

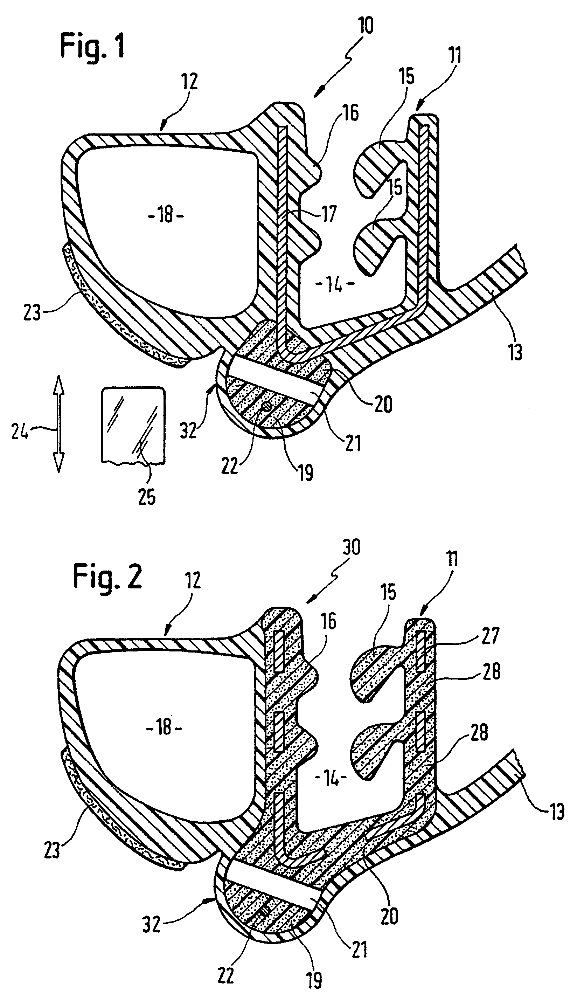

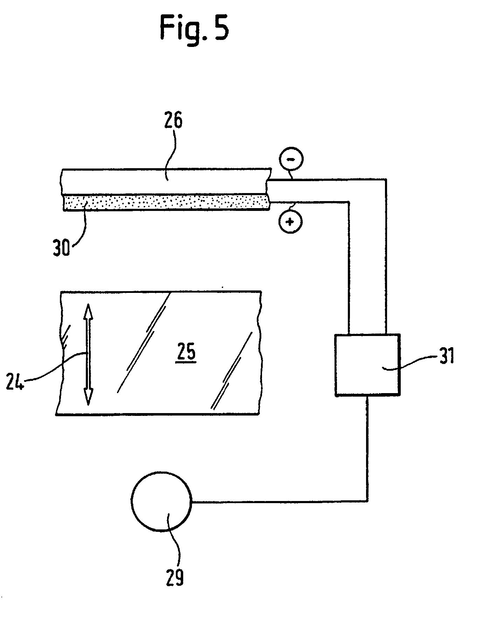

In Figur 1 ist eine erste Ausführungsform eines erfindungsgemäßen Dichtungsprofils 10 dargestellt. Das Dichtungsprofil 10 umfaßt einen Klemmbereich 11 sowie einen Dichtbereich 12. Weiter ist eine Abdekkung 13 vorgesehen, mit der nicht näher dargestellte Bauteile nach dem Befestigen des Dichtungsprofils 10 überdeckt werden. Zur Befestigung weist der Klemmbereich 11 eine Ausnehmung 14 auf, in die mehrere Lippen 15 und Vorsprünge 16 hineinragen. Die Ausnehmung 14 wird von einem im Querschnitt U-förmigen Carrier 17 umgriffen. Zur Befestigung wird die Ausnehmung 14 des Klemmbereichs 11 auf einen in Figur 5 näher dargestellten Flansch aufgeschoben. Die Lippen 15 und Vorsprünge 16 werden hierbei fest an den Flansch angepreßt und verhindern ein Lösen des Dichtungsprofils 10.

Der Dichtbereich 12 umfaßt eine Hohlkammer 18, die an ihrer einer Scheibe 25 zugewandten Seite mit einer reibungsmindernden Beschichtung 23, insbesondere einer Beflockung versehen ist. Die Scheibe 25 ist in Pfeilrichtungen 24 beweglich. Beim Schließen der Scheibe 25 wird die Hohlkammer 18 verformt, so daß die gewünschte Dichtwirkung bereitgestellt wird.

Das Dichtungsprofil 10 weist weiter einen Einklemmschutzbereich 32 auf. Der Einklemmschutzbereich 32 umfaßt zwei elektrisch leitende Bereiche 19, 20, die über einen Zwischenraum 21 zueinander beabstandet sind. Sobald beim Schließen der Scheibe 25 ein Gegenstand eingeklemmt wird, wird der Bereich 19 auf den Bereich 20 zubewegt. Ein Kontakt der beiden Bereiche 19, 20 löst einen Schaltvorgang zum Ansteuern des Antriebsaggregats des Scheibe 25 aus. Dieser Schaltvorgang kann die Bewegung des Scheibe 25 entweder unterbrechen oder reversieren.

Die Bereiche 19, 20 werden vorteilhaft durch Zusatz eines elektrisch leitfähigen Materials zu dem Grundmaterial des Dichtungsprofils 10 mittels Koextrusion hergestellt. Zur Verringerung des Durchgangswiderstands weist der Bereich 19 einen metallischen Leiter 22 auf. Der Bereich 20 umgibt teilweise den Carrier 17, der als metallischer Leiter ausgeführt ist. Hierdurch wird der Durchgangswiderstand des elektrisch leitenden Bereichs 20 ebenfalls abgesenkt. Ein zusätzlicher metallischer Leiter für den Breich 20 ist nicht erforderlich.

Bei der Ausführungsform gemäß Figur 1 sind sämtliche elektrisch leitenden Bauteile 17, 22 und Bereiche 19, 20 von elektrisch nicht leitendem Material des Dichtungsprofils 10 umgeben. Das Dichtungsprofil 10 ist somit gegenüber der Umgebung elektrisch neutral.

In den Figuren 2 bis 4 sind drei weitere Ausführungsformen eines erfindungsgemäßen Dichtungsprofils 30, 40, 50 dargestellt. Gleiche oder funktionsidentische Bauteile wurden hierbei mit denselben Bezugszeichen wie in Figur 1 versehen. Zur Vermeidung von Wiederholungen wird zur Beschreibung dieser Bauteile auf obenstehende Ausführungen verwiesen.

Das Dichtungsprofil 30 gemäß Figur 2 weist einen Carrier 27 auf, der vollständig von dem elektrisch leitenden Bereich 20 umgeben ist. Der Carrier 27 ist mit Ausnehmungen 28 versehen, durch die das Material des elektrisch leitenden Bereichs 20 hindurch dringt. Die Berührfläche zwischen dem elektrisch leitenden Bereich 20 und dem Carrier 27 wird durch die Ausnehmungen wesentlich vergrößert. Weiter kann eine Potentialdifferenz von einer Seite des Carriers 27 durch die Ausnehmungen 28 auf die andere Seite des Carriers allein durch den Bereich 20 geleitet werden. Auch bei Verwendung eines nicht leitenden Carriers 27 sind die Innenseite und Außenseite des Carriers 27 elektrisch leitend miteinander durch die Ausnehmungen 28 verbunden.

Der elektrisch leitende Bereich 20 erstreckt sich bis zur Außenseite des Dichtungsprofils 30. Sobald das Dichtungsprofil 30 an einem Flansch oder einem Rahmen befestigt wird, kommen die Lippen 15 und Ansätze 16 des Klemmbereichs 11 in elektrisch leitende Verbindung mit diesem Flansch oder Rahmen. Hierdurch wird der Durchgangswiderstand des elektrisch leitenden Bereichs 20 wesentlich abgesenkt. Weiter wird die Verwendung eines Carriers 27 aus einem nicht leitenden Material, wie beispielsweise Kunststoff, möglich.

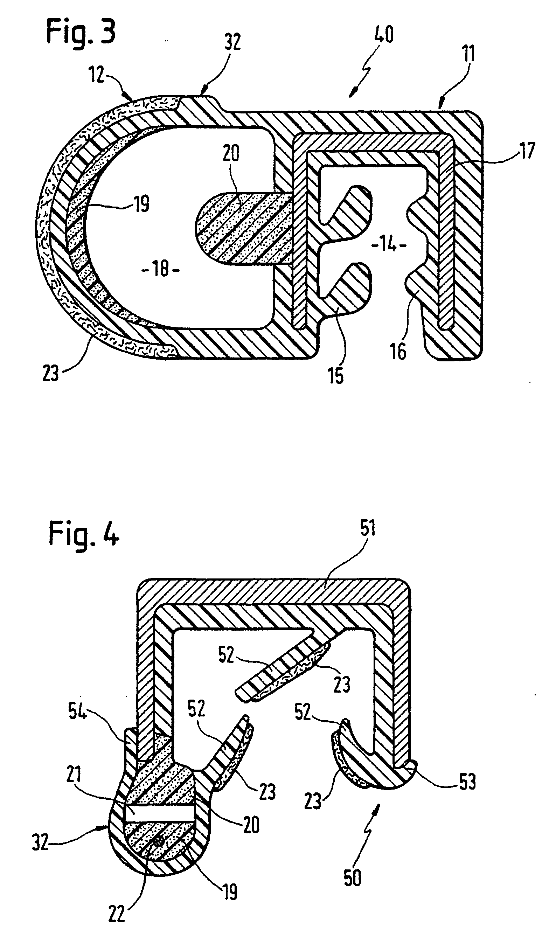

Bei dem in Figur 3 dargestellten Dichtungsprofil 40 weist der Einklemmschutzbereich 32 eine Hohlkammer 18 auf. In der Hohlkammer 18 sind die elektrisch leitenden Bereiche 19, 20 angeordnet. Der Bereich 20 berührt hierbei den Carrier 17. Bei einer Verformung der Hohlkammer 18 werden die Bereiche 19, 20 miteinander in Kontakt gebracht und der oben beschriebene Schaltvorgang ausgelöst.

Gleichzeitig dient die Hohlkammer 18 des Einklemmschutzbereichs 32 zum Abdichten einer in Figur 3 nicht näher dargestellten kraftbetätigten Schließeinrichtung. Insbesondere kann das Dichtungsprofil 40 gemäß Figur 3 als umlaufende Dichtung für ein Schiebedach eines Kraftfahrzeugs verwendet werden.

In Figur 4 ist ein erfindungsgemäßes Dichtungsprofil 50 dargestellt, das in einen im wesentlichen U-förmigen Rahmen 51 aus elektrisch leitendem Material eingeschoben ist. Das Dichtungsprofil 50 weist eine Reihe von Lippen 52 mit einer reibungsmindernden Beschichtung 23 zur dichtenden Anlage an der Scheibe 25 auf. Zur Befestigung des Dichtungsprofils 50 dienen Ansätze 53, 54. Der elektrisch leitende Bereich 20 des Einklemmschutzbereichs 32 umgreift den Rahmen 51 teilweise und erstreckt sich bis zur Außenseite des Dichtungsprofils 50.

Die in den Figuren 1, 2 und 4 dargestellten Dichtungsprofile 10, 30, 50 eignen sich insbesondere zum Abdichten von Seitenscheiben in Kraftfahrzeugen. Figur 5 zeigt eine schematische Prinzipdarstellung des Dichtungsprofils 30 im montierten Zustand. Das Dichtungsprofil 30 ist mit seinem Klemmbereich 11 auf einem Flansch 26 aufgeschoben. Der Flansch 26 steht somit über die Lippen 15 und Vorsprünge 16 in elektrisch leitender Verbindung mit dem elektrisch leitenden Bereich 20. Der Flansch 26 wird, wie bei Fahrzeugen üblich, auf Masse gelegt, während der elektrisch leitende Bereich 19 des Dichtungsprofils 30 mit dem Pluspol einer nicht näher dargestellten Spannungsquelle verbunden wird. Sobald die Scheibe 25 angehoben und der Einklemmschutzbereich 32 verformt wird, kommen die beiden Bereiche 19, 20 miteinander in Kontakt. Hierdurch wird ein Schaltvorgang ausgelöst, der an eine Steuerung 31 gemeldet wird. Die Steuerung 31 steuert entsprechend einen Motor 29 zum Bewegen der Scheibe 25 an, der die Bewegung der Scheibe 25 anhält oder umkehrt.

Das erfindungsgemäße Dichtungsprofil 10, 30, 40, 50 ermöglicht den vollständigen Verzicht auf einen der bisher erforderlichen metallischen Leiter. Die Einklemmschutzfunktion und die Dichtfunktion werden hierdurch nicht beeinträchtigt. Vielmehr werden der Platzbedarf, das Gewicht, die Kosten und der Herstellungsaufwand gegenüber den bekannten Dichtungsprofilen wesentlich verringert.

## Patentansprüche

1. Dichtungsprofil (10; 30; 40; 50) zum Abdichten einer kraftbetätigten Schließeinrichtung (25) mit einem Einklemmschutz (32), der mindestens zwei zueinander beabstandete, elektrisch leitfähige Bereiche (19, 20) aufweist, deren Kontakt einen Schaltvorgang zum Ansteuern des Antriebsaggregats (29) der Schließeinrichtung (25) auslöst, wobei mindestens einer dieser Bereiche (29; 20) zur Verringerung des Durchgangswiderstands mit einem metallischen Leiter (17; 26; 27; 51) elektrisch leitend verbunden ist, **dadurch gekennzeichnet, daß** der metallische Leiter als Carrier (17; 27) zur Befestigung des Dichtungsprofils (10; 30; 40) und/oder als Flansch (26) oder Rahmen (51), an dem das Dichtungsprofil (10; 30; 40; 50) befestigbar ist, ausgebildet ist.

2. Dichtungsprofil nach Anspruch 1, **dadurch gekennzeichnet, daß** der Carrier (17) den elektrisch leitenden Bereich (20) berührt.

3. Dichtungsprofil nach Anspruch 1, **dadurch gekennzeichnet, daß** der Carrier (17; 27) teilweise oder vollständig von dem elektrisch leitenden Bereich (20) umgeben ist.

4. Dichtungsprofil nach einem der Ansprüche 1 bis 3, **dadurch gekennzeichnet, daß** der Carrier (27) mit Ausnehmungen (28) versehen ist.

5. Dichtungsprofil nach einem der Ansprüche 1 bis 4, **dadurch gekennzeichnet, daß** sich der elektrisch leitenden Bereich (20) bis zur Außenseite des Dichtungsprofils (30; 50) erstreckt.

6. Dichtungsprofil nach Anspruch 5, **dadurch gekennzeichnet, daß** der elektrisch leitende Bereich (20) Lippen (15) oder Ansätze (54) zum Befestigen des Dichtungsprofils (30) auf dem Flansch (26) oder an dem Rahmen (51) aufweist.

7. Dichtungsprofil nach einem der Ansprüche 1 bis 6, **dadurch gekennzeichnet, daß** der Einklemmschutzbereich (32) eine Hohlkammer (18) aufweist, in der mindestens einer der elektrisch leitenden Bereiche (19; 20) angeordnet ist.

8. Dichtungsprofil nach Anspruch 7, **dadurch gekennzeichnet, daß** die Hohlkammer zum Abdichten der kraftbetätigten Schließeinrichtung (25) dient.

9. Dichtungsprofil nach einem der Ansprüche 1 bis 8, **dadurch gekennzeichnet, daß** der von dem Carrier (17; 27), dem Flansch (26) oder dem Rahmen (51) getrennte elektrisch leitende Bereich (19) einen metallischen Leiter (22) aufweist.

## Claims

1. A sealing profile (10; 30; 40; 50) for sealing a powered closure means (25) including a trapping protector (32) comprising at least two electrically conductive portions (19, 20) spaced away from each other, whose contact activates a switching action for signalling the unit (29) powering the closure means, whereby at least one of these portions (29; 20) is electrically conductively connected to a metallic conductor (17; 26; 27; 51) to reduce the transitional resistance, **characterized in that** the metallic conductor is configured as a carrier (17; 27) for securing the sealing profile (10; 30; 40) and/or as a flange (26) or frame (51) to which the sealing profile (10; 30; 40; 50) can be secured.

2. The sealing profile as set forth in claim 1, **characterized in that** the carrier (17) contacts the electrically conductive portion (20).

3. The sealing profile as set forth in claim 1, **characterized in that** the carrier (17) is partly or fully surrounded by the electrically conductive portion (20).

4. The sealing profile as set forth in any of the claims 1 to 3, **characterized in that** the carrier (27) is provided with recesses (28).

5. The sealing profile as set forth in any of the claims 1 to 4, **characterized in that** the electrically conductive portion (20) extends to the outer side of the sealing profile (30; 50).

6. The sealing profile as set forth in claim 5, **characterized in that** the electrically conductive portion (20) comprises lips (15) or protuberances (54) for securing the sealing profile (30) to the flange (26) or to the frame (51).

7. The sealing profile as set forth in any of the claims 1 to 6, **characterized in that** the area of the trapping protector (32) comprises a cavity (18) in which at least one of the electrically conductive portions (19; 20) is arranged.

8. The sealing profile as set forth in claim 7, **characterized in that** the cavity serves to weatherseal the powered closure means (25).

9. The sealing profile as set forth in any of the claims 1 to 8, **characterized in that** the electrically conductive portion (19) separated from the carrier (17; 27), flange (26) or frame (51) comprises a metallic conductor (22).

## Revendications

1. Profil d'étanchéité (10 ; 30 ; 40 ; 50) pour étanchéifier un dispositif de fermeture (25) actionné par une force, comportant une protection anti-pincement (32) qui présente au moins deux régions (19, 20) électroconductrices espacées l'une par rapport à l'autre, dont le contact déclenche une opération de commutation pour piloter le mécanisme d'entraînement (29) du dispositif de fermeture (25), au moins une de ces régions (19 ; 20) étant reliée de manière électroconductrice à un conducteur métallique (17 ; 26, 27 ; 51) pour réduire la résistance de passage, **caractérisé en ce que** le conducteur métallique est réalisé en tant que support (17 ; 27) pour fixer le profil d'étanchéité (10 ; 30 ; 40) et/ou en tant que bride (26) ou en tant que cadre (51) sur laquelle/lequel on peut fixer le profil d'étanchéité (10 ; 30 ; 40 ; 50).

2. Profil d'étanchéité selon la revendication 1, **caractérisé en ce que** le support (17) touche la région électroconductrice (20).

3. Profil d'étanchéité selon la revendication 1, **caractérisé en ce que** le support (17 ; 27) est entouré partiellement ou entièrement par la région électroconductrice (20).

4. Profil d'étanchéité selon l'une des revendications 1 à 3, **caractérisé en ce que** le support (27) est pourvu d'évidements (28).

5. Profil d'étanchéité selon l'une des revendications 1 à 4, **caractérisé en ce que** la région électroconductrice (20) s'étend jusqu'à la face extérieure du profil d'étanchéité (30 ; 50).

6. Profil d'étanchéité selon la revendication 5, **caractérisé en ce que** la région électroconductrice (20) présente des lèvres (15) ou des saillies (54) pour fixer le profil d'étanchéité (30) sur la bride (26) ou sur le cadre (51).

7. Profil d'étanchéité selon l'une des revendications 1 à 6, **caractérisé en ce que** la région anti-pincement (32) présente une chambre creuse (18) dans laquelle est agencée au moins une des régions électroconductrices (19 ; 20).

8. Profil d'étanchéité selon la revendication 7, **caractérisé en ce que** la chambre creuse sert à étanchéifier le dispositif de fermeture actionné par une force.

9. Profil d'étanchéité selon l'une des revendications 1 à 8, **caractérisé en ce que** la région électroconductrice (19) séparée du support (17 ; 27), de la bride (26) ou du cadre (51) présente un conducteur métallique (22).
